# EUROPÄISCHE PATENTANMELDUNG

(11) **EP 3 075 682 A1**
(43) Veröffentlichungstag der Anmeldung: **05.10.2016**
(21) Anmeldenummer: 16150974.0
(22) Anmeldetag: 12.01.2016
(51) Int. Cl.: B65G 17/34, B65G 17/46, B65G 54/02

(54) **TRANSPORTVORRICHTUNG**

(30) Priorität: 13.01.2015 DE 102015100444
(71) Anmelder: Pester Pac Automation GmbH, 87787 Wolfertschwenden (DE)
(72) Erfinder: Haug, Hans, 87730 Bad Grönenbach (DE)
(74) Vertreter: Patentanwaltzkanzlei Hutzelmann

(57) **Zusammenfassung**

Transportvorrichtung (1) für Lasten (6), vorzugsweise für die Verwendung in Verpackungsmaschinen, wobei eine oder mehrere Aufnahmen (4) für Lasten (6) vorgesehen sind.

## Beschreibung

Die Erfindung bezieht sich auf eine Transportvorrichtung für Lasten, vorzugsweise für die Verwendung in Verpackungsmaschinen.

Es sind verschiedenartige Transportvorrichtungen dieses Typs bekannt, die jedoch alle den Nachteil aufweisen, nur für jeweils ein bestimmtes Verpackungsformat einsetzbar zu sein. Sollen andere Formate bearbeitet werden, so muss die Transportvorrichtung umgebaut werden. Dies ist wenig flexibel.

Zudem kann die Anzahl der zu transportierenden Verpackungen nur durch aufwendige Änderungen angepasst bzw. verändert werden.

Der vorliegenden Erfindung liegt die Aufgabe zugrunde, eine universell einsetzbare Transportvorrichtung vorzuschlagen, die vor allem im Umfeld von Verpackungsmaschinen flexibel einsetzbar ist.

Diese Aufgabe wird erfindungsgemäß dadurch gelöst, daß eine oder mehrere Aufnahmen für Lasten vorgesehen sind.

Hierdurch lassen sich Lasten, insbesondere Verpackungen aufnehmen und transportieren.

Dabei hat es sich als sehr vorteilhaft erwiesen, wenn die Aufnahmen hinsichtlich ihrer Breite und/oder Länge verstellbar ausgebildet sind.

Damit lassen sich nicht nur unterschiedliche Formate aufnehmen, sondern die Lasten können auch geklemmt werden um ein Verrutschen oder dergleichen zu vermeiden.

Ebenfalls sehr vorteilhaft ist es erfindungsgemäß, wenn die Aufnahmen zueinander hinsichtlich ihres Abstandes verstellbar ausgebildet sind.

Hierdurch können verschiedene Formate aufgenommen werden und auch die aufgenommenen Gegenstände können zwischen zwei einander zugeordneten Aufnahmen geklemmt werden.

Erfindungsgemäß ist es auch sehr vorteilhaft, wenn die Aufnahmen auf einer Kette, einem Band, einem Seil oder dergleichen angeordnet sind oder auf diesen anordenbar sind.

Damit können die Aufnahmen bzw. korrespondierende Aufnahmen bewegt werden.

Dabei ist es äußerst vorteilhaft, wenn die Aufnahmen an einer Kette, einem Band, einem Seil oder dergleichen lösbar befestigbar sind.

Hierdurch kann auch eine Aus- und Einschleusung von Aufnahmen realisiert werden.

Eine weitere erfindungsgemäß sehr vorteilhafte Ausgestaltung liegt vor, wenn die Aufnahmen in Führungsschienen oder dergleichen einsetzbar sind.

Damit lassen sich nicht nur horizontale, sondern auch vertikale Anordnungen erreichen.

Weiterhin sehr vorteilhaft ist es erfindungsgemäß, wenn die Aufnahmen magnetisch an die Transportvorrichtung gekoppelt sind.

Auch hiermit lassen sich horizontale und vertikale Anordnungen erreichen. Die Aufnahmen werden auf der Transportvorrichtung magnetisch auf der vorgesehenen Bahn gehalten.

Äußerst vorteilhaft ist es erfindungsgemäß, wenn die Transportvorrichtung horizontal angeordnet ist.

Ebenfalls äußerst vorteilhaft ist es, wenn die Transportvorrichtung vertikal angeordnet ist.

Auch Kombinationen sind denkbar. So lassen sich beliebige Anordnungen zum Transport von Gegenständen, insbesondere von Verpackungen in Verpackungsmaschinen herstellen.

Eine weitere sehr vorteilhafte Fortbildung der Erfindung liegt auch dann vor, wenn die Aufnahmen einzeln oder zusammen antreibbar bzw. bewegbar ausgebildet sind, wobei eine Ausschleusung vorgesehen sein kann.

Hierdurch ist der Transport der Gegenstände äußerst flexibel. Es ist denkbar, daß Gruppen von Aufnahmen gebildet werden, die dann zusammen antreibbar bzw. bewegbar sind.

Weiterhin hat es sich erfindungsgemäß als sehr vorteilhaft erwiesen, wenn die Aufnahmen über Halteelemente verfügen, mit denen Gegenstände aufgenommen bzw. geklemmt werden können.

Hierdurch werden die Gegenstände auf bzw. in den Aufnahmen gesichert und festgehalten.

Eine weitere sehr vorteilhafte Ausgestaltung der Erfindung liegt vor, wenn als Antrieb ein oder mehrere zentrale Antriebsmotoren oder eine Linearmotorbahn vorgesehen ist.

Damit lassen sich sehr flexible Konstruktionen erzeugen.

Im folgenden wird die Erfindung anhand von mehreren Ausführungsbeispielen veranschaulicht.

Dabei zeigen:
- Fig. 1: eine schematische Ansicht einer horizontalen Transportvorrichtung mit Ausschleusung,
- Fig. 2: eine schematische Ansicht einer weiteren Transportvorrichtung mit Aufnahmen und vertikaler Bewegung,
- Fig. 3: eine schematische Ansicht einer vertikal angeordneten Transportvorrichtung,
- Fig. 4: eine schematische Ansicht zweier zusammenwirkender Aufnahmen,
- Fig. 5: eine schematische Ansicht zweier weiterer zusammenwirkender Aufnahmen, und
- Fig. 6: eine schematische Ansicht einer einzelnen Aufnahme mit Klemmung.

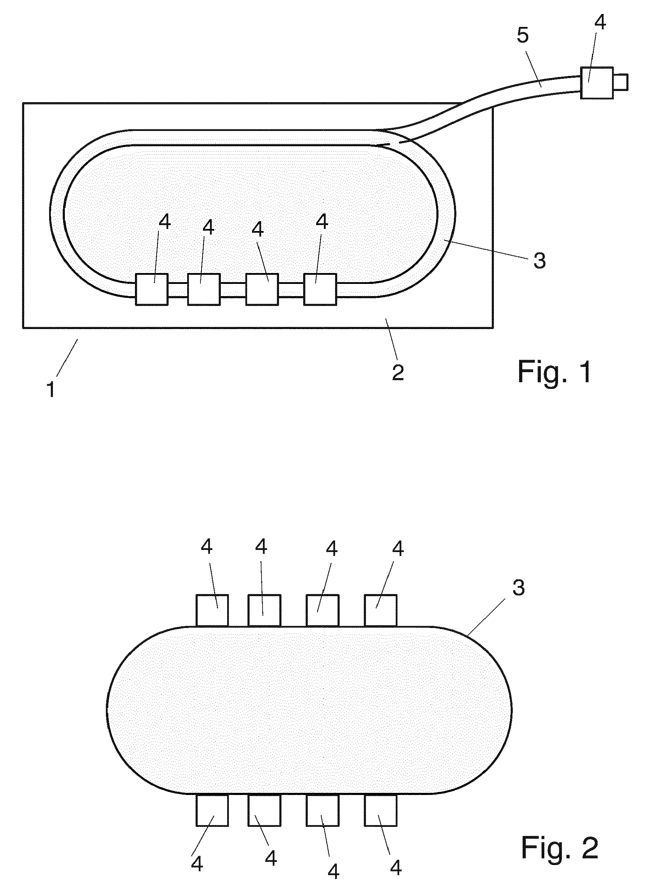

Mit 1 ist in Fig. 1 eine Transportvorrichtung mit einem als Tisch ausgeführten Unterteil 2 bezeichnet. Auf diesem Unterteil 2 ist eine Bahn 3 vorgesehen, auf der Aufnahmen 4 bewegt werden können. Zudem ist eine Ausschleusung 5 vorgesehen, mittels der Aufnahmen 4 aus der Bahn 3 ausgeschleust und wieder eingeschleust werden können.

Um die Aufnahmen 4 bewegen zu können ist ein Antriebsmechanismus vorgesehen, der beispielsweise als Kette, Band, oder Seil ausgeführt sein kann. Die Aufnahmen werden dann jeweils eingekuppelt. Auch ist es denkbar, daß eine Linearmotorbahn vorgesehen ist, welche die einzelnen Aufnahmen 4 anzutreiben vermag.

Die Aufnahmen 4 werden dabei in Rillen oder dergleichen geführt. Auch eine magnetische Haftung ist denkbar.

Die Bahn 3 kann dabei komplett horizontal ausgeführt sein.

Wie in Fig. 2 dargestellt ist aber auch eine vertikale Anordnung der Bahn 3 denkbar. Die Aufnahmen 4 sind dabei in diesem Ausführungsbeispiel jedoch horizontal angeordnet.

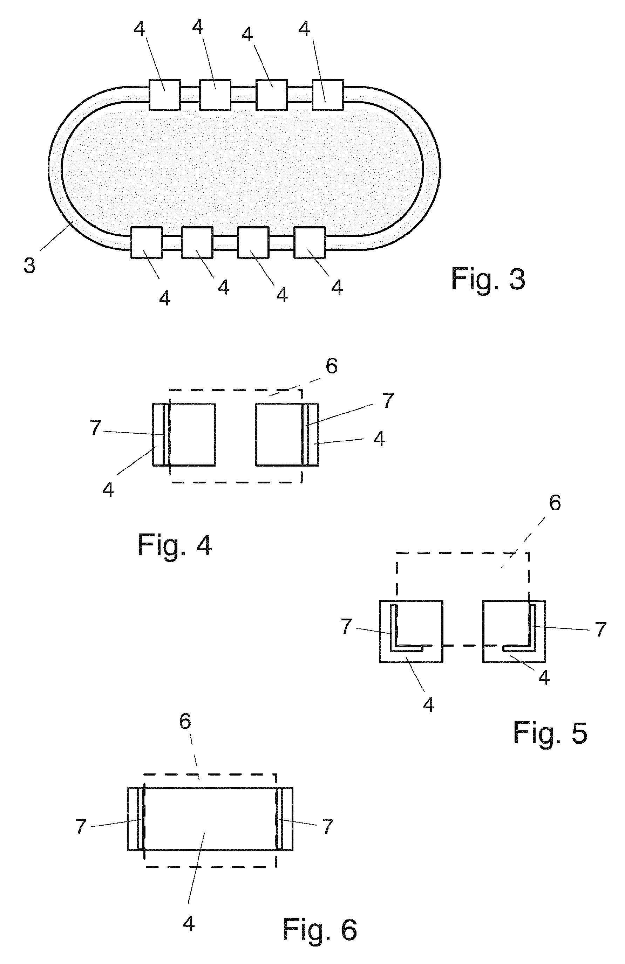

Es ist aber auch eine vertikale oder stirnseitige Anordnung denkbar, wie diese in Fig. 3 dargestellt ist.

Auf den Aufnahmen 4 können Gegenstände 6, vornehmlich Verpackungen in Verpackungsmaschinen, aufgelegt werden. Hierzu sind Halteelemente 7 vorgesehen, die ein versehentliches Herunterrutschen der Gegenstände 6 verhindern.

Um das Herunterrutschen sicher zu verhindern, werden die Gegenstände 6 zwischen zwei Haltelementen 7 geklemmt.

Hierzu sind zwei Varianten denkbar. Die erste Variante sieht vor, daß auf zwei benachbarten Aufnahmen 4 jeweils mindestens ein Haltelement 7 vorgesehen ist. Der Gegenstand 6 wird zwischen den beiden Haltelementen 7 der beiden benachbarten Aufnahmen 4 durch Veränderung des Abstandes geklemmt.

Dabei kann der Abstand zwischen den Aufnahmen 4 und/oder der Abstand zwischen den Haltelementen 7 verändert werden.

Hierzu können nicht dargestellte Servoeinheiten oder Pneumatikeinheiten vorgesehen werden. Andere Antriebe sind denkbar.

Bei der zweiten Variante werden auf einer Aufnahme 4 zwei oder mehr Haltelemente 7 vorgesehen, deren Abstand zueinander veränderbar ist.

Durch die Abstandsveränderung wird der jeweilige Gegenstand 6 geklemmt.

Die Haltelemente 7 können beispielsweise als Platten, Winkel, Stifte oder dergleichen ausgebildet sein.

Die Aufnahmen 4 können auch selbstfahrend ausgebildet sein. Dabei ist es denkbar, daß diese frei fahren können und beispielsweise nur durch Gravitation oder Magnetkraft gehalten werden. Auch denkbar ist es, daß diese in Schienen geführt werden, wobei diese Führung auch nur in Bereichen vorgesehen werden kann, in denen die Gravitation nicht in der Lage ist, die Aufnahmen 4 am vorgesehenen Platz zu halten, also beispielsweise bei stirnseitigen Anordnungen oder in Überkopf-Bereichen.

In diesem Zusammenhang ist es auch denkbar, daß die Aufnahmen Räder aufweisen, die lenkbar ausgeführt sein können.

An der Transportvorrichtung 1 können nicht dargestellte Sensoren vorgesehen sein, welche die Umgebung wenigstens insoweit zu erfassen vermögen, daß Zusammenstöße mit Gegenständen und/oder Personen vermieden werden können.

Es ist denkbar, daß weitere Sensoren, zum Beispiel zur Positionsbestimmung oder dergleichen vorgesehen sind. Ebenso können Aktuatoren für verschiedenste Aufgaben vorgesehen sein.

Eine Kommunikation mit anderen Aufnahmen 4 und/oder einer zentralen Einrichtung ist denkbar.

Grundsätzlich sollen die Aufnahmen 4 autonom oder von außen gesteuert auf einer vorgegebenen Fahrbahn manövrieren oder vorgegebene Bahnen ablaufen können. Den Aufnahmen 4 kann jeweils eine Aufgabe vorgegeben werden. Durch Ein- und Ausschleusung einzelner oder mehrerer Aufnahmen 4 sind auch Ausweichmanöver denkbar. Zudem können dabei Aufnahmen 4 ausgetauscht werden oder weitere Formate von einem Vorrat geholt werden.

Die Aufnahmen 4 fahren in durch eine zentrale Stelle koordinierter Art und Weise von einer Bearbeitungsstation zur nächsten und können so einen flexiblen Transport innerhalb der Verpackungsmaschine ermöglichen.

Durch eine horizontale, vertikale oder gemischte Anordnung kann der Grundflächenbedarf der Verpackungsmaschine optimiert und in der Regel deutlich reduziert werden.

## Patentansprüche

1. Transportvorrichtung (1) für Lasten (6), vorzugsweise für die Verwendung in Verpackungsmaschinen, **dadurch gekennzeichnet, daß** eine oder mehrere Aufnahmen (4) für Lasten (6) vorgesehen sind.

2. Transportvorrichtung nach Anspruch 1, **dadurch gekennzeichnet, daß** die Aufnahmen (4) hinsichtlich ihrer Breite und/oder Länge verstellbar ausgebildet sind.

3. Transportvorrichtung nach Anspruch 1 oder 2, **dadurch gekennzeichnet, daß** die Aufnahmen (4) zueinander hinsichtlich ihres Abstandes verstellbar ausgebildet sind.

4. Transportvorrichtung nach Anspruch 1, 2 oder 3, **dadurch gekennzeichnet, daß** die Aufnahmen (4) auf einer Kette, einem Band, einem Seil oder dergleichen angeordnet sind oder auf diesen anordenbar sind.

5. Transportvorrichtung nach Anspruch 4, **dadurch gekennzeichnet, daß** die Aufnahmen (4) an einer Kette, einem Band, einem Seil oder dergleichen lösbar befestigbar sind.

6. Transportvorrichtung nach einem der vorangehenden Ansprüche, **dadurch gekennzeichnet, daß** die Aufnahmen (4) in Führungsschienen oder dergleichen einsetzbar sind.

7. Transportvorrichtung nach einem der vorangehenden Ansprüche, **dadurch gekennzeichnet, daß** die Aufnahmen (4) magnetisch an die Transportvorrichtung (1) gekoppelt sind.

8. Transportvorrichtung nach einem der vorangehenden Ansprüche, **dadurch gekennzeichnet, daß** die Transportvorrichtung (1) horizontal angeordnet ist.

9. Transportvorrichtung nach einem der vorangehenden Ansprüche, **dadurch gekennzeichnet, daß** die Transportvorrichtung (1) vertikal angeordnet ist.

10. Transportvorrichtung nach einem der vorangehenden Ansprüche, **dadurch gekennzeichnet, daß** die Aufnahmen (4) einzeln oder zusammen antreibbar bzw. bewegbar ausgebildet sind, wobei eine Ausschleusung (5) vorgesehen sein kann.

11. Transportvorrichtung nach einem der vorangehenden Ansprüche, **dadurch gekennzeichnet, daß** die Aufnahmen (4) über Halteelemente (7) verfügen, mit denen Gegenstände (6) aufgenommen bzw. geklemmt werden können.

12. Transportvorrichtung nach einem der vorangehenden Ansprüche, **dadurch gekennzeichnet, daß** als Antrieb ein oder mehrere zentrale Antriebsmotoren oder eine Linearmotorbahn vorgesehen ist.
